# EUROPÄISCHE PATENTSCHRIFT

(11) **EP 2 520 462 B1**
(45) Veröffentlichungstag und Bekanntmachung des Hinweises auf die Patenterteilung: **01.01.2014**
(21) Anmeldenummer: 11172481.1
(22) Anmeldetag: 04.07.2011
(51) Int. Cl.: B60P 3/38

(54) **Fahrzeug**
Vehicle
Véhicule

(30) Priorität: 05.05.2011 DE 202011100272 U
(43) Veröffentlichungstag der Anmeldung: 07.11.2012
(73) Patentinhaber: Schuler, Karl-Heinz, 88213 Ravensburg/Schmalegg (DE)
(72) Erfinder: Schuler, Karl-Heinz, 88213 Ravensburg/Schmalegg (DE)
(74) Vertreter: Daub, Thomas

(56) Entgegenhaltungen:
- WO-A1-02/096241
- DE-U1- 9 214 041
- DE-U1- 20 006 719
- DE-U1-202004 017 062
- US-A1- 2006 242 762

## Beschreibung

Die Erfindung bezieht sich auf ein Fahrzeug, insbesondere Wohnmobil oder Wohnwagen, zur Beherbergung von Menschen nach dem Oberbegriff des Patentanspruches 1.

Solche Fahrzeuge werden üblicherweise in unterschiedlichen Größen hergestellt. Wenn eine kostengünstige Fahrzeuggröße mit einer Innenraumbreite von etwa 210 bis 220 Zentimetern zur Verfügung gestellt ist, ist diese Fahrzeuggröße am kostengünstigsten, es ergeben sich jedoch Platzprobleme, wenn die üblichen und notwendigen Einrichtungsgegenstände nicht wirkungsvoll, also platzsparend angeordnet sind.

Wenn daher eine Liegefläche von 195 Zentimetern zur Verfügung gestellt werden soll und diese parallel zu der Rückwand, also senkrecht zu der Fahrtrichtung des Fahrzeuges verläuft, dann ist die benachbart zu der Rückwand angeordnete Liegefläche nicht ohne weiteres zugänglich, und zwar insbesondere dann, wenn die Liegefläche aus zwei oder mehreren Schlafplätzen besteht. Die an der Rückwand liegende Person müsste nämlich über die davorliegende Person steigen und dies führt im Schlafzustand oftmals zu unerwünschten Berührungen und reduziert den Schlafkomfort der anderen Person.

Wenn dagegen die Liegefläche im Innenraum des Fahrzeuges parallel zu der Fahrtrichtung ausgerichtet ist, dann wird der zur Verfügung stehende Platz erheblich, um andere Einrichtungsgegenstände, beispielsweise Küchen, Möbel oder sanitäre Einrichtungen, unterzubringen, eingeschränkt.

Es ist nicht bekannt, dass ein Fahrzeug mit einer Innenraumbreite von 210 bis 220 Zentimetern, vorzugsweise von 216 Zentimetern, eine Liegefläche aufweist, die mindestens eine Länge von 195 Zentimetern einnimmt und die ohne weiteres, zumindest von zwei senkrechten Seiten der Liegefläche begehbar und damit zugänglich ist.

Siehe z.B. DE 20006719U.

Es ist daher Aufgabe der Erfindung, ein Fahrzeug der eingangs genannten Gattung bereitzustellen, in dem zum einen eine Liegefläche mit einer Länge von mindestens 195 Zentimeter im Heckbereich des Fahrzeuges angeordnet ist und die zum anderen von mindestens zwei Seiten aus, die senkrecht zueinander verlaufen, begehbar und damit zugänglich ist. Darüber hinaus soll gewährleistet sein, dass sich ein Mensch im Bereich des Zugangs der Liegefläche um die eigene Achse drehen kann, um die Liegefläche zu besteigen bzw. diese auf bequeme Art und Weise zu verlassen.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass zum einen zwischen der Auflageplatte und einer der beiden Seitenwände ein Freiraum gebildet ist, kann die Auflageplatte von zwei senkrecht zueinander verlaufenden Seiten benutzt werden und zum anderen ist die Liegefläche, die die Matratze, die auf der Auflageplatte aufliegt, mit einer Länge von mindestens 195 Zentimetern an die übliche Länge einer Matratze in einem Wohnwagen oder Wohnmobil angepasst werden.

Darüber hinaus ist vorteilhaft, dass die Matratze die Auflageplatte überragt und teilweise in den Freiraum übersteht und dass die Matratze im Bereich des Freiraumes eine wellen- oder herzförmige stirnseitige Kontur aufweist, so dass zwischen zwei Wellen eine Aussparung entsteht, die an den Körperumfang im Bereich des Oberschenkel oder Hüfte eines Menschen angepasst ist, so dass der Mensch sich im Bereich dieser Aussparung um die eigene Achse bewegen kann, um sich in Richtung des Bettes oder in Richtung des Freiraumes zu positionieren, wodurch gewährleistet ist, dass die Zugänglichkeit der Auflageplatte und des Freiraumes vereinfacht ist, denn ein Rückwärtsgehen oder ein seitliches entlang der Innenwand hangelndes Bewegen ist nicht erforderlich.

Die Matratze besteht aus einem elastischen Werkstoff, vorzugsweise Schaumstoff, der zur Bewegungsvereinfachung nach unten, oben oder seitlich weggedrückt werden kann.

Die Auflageplatte ist daher von zwei Seiten auf einfache Art und Weise zugänglich, so dass auch die Person, die entlang der Rückwand auf der Auflageplatte liegt, die davor positionierte Person nicht übersteigen muss und diese vielmehr im Bereich des Freiraumes umgehen kann.

In der Zeichnung ist ein erfindungsgemäßes Ausführungsbeispiel dargestellt, das nachfolgende näher erläutert ist. Im Einzelnen zeigt:
- Figur 1: einen Grundriss in einem Fahrzeug für eine ein Bett bildende Auflageplatte und eine auf diese angeordneten Matratze mit einem Freiraum, der zwischen der Auflageplatte und einer der Innenwände des Fahrzeuges vorgesehen ist, in Draufsicht,
- Figur 2a: das Fahrzeug gemäß Figur 1, entlang der Schnittlinie lla-lla und
- Figur 2b: das Fahrzeug gemäß Figur 1, entlang der Schnittlinie llb-llb.

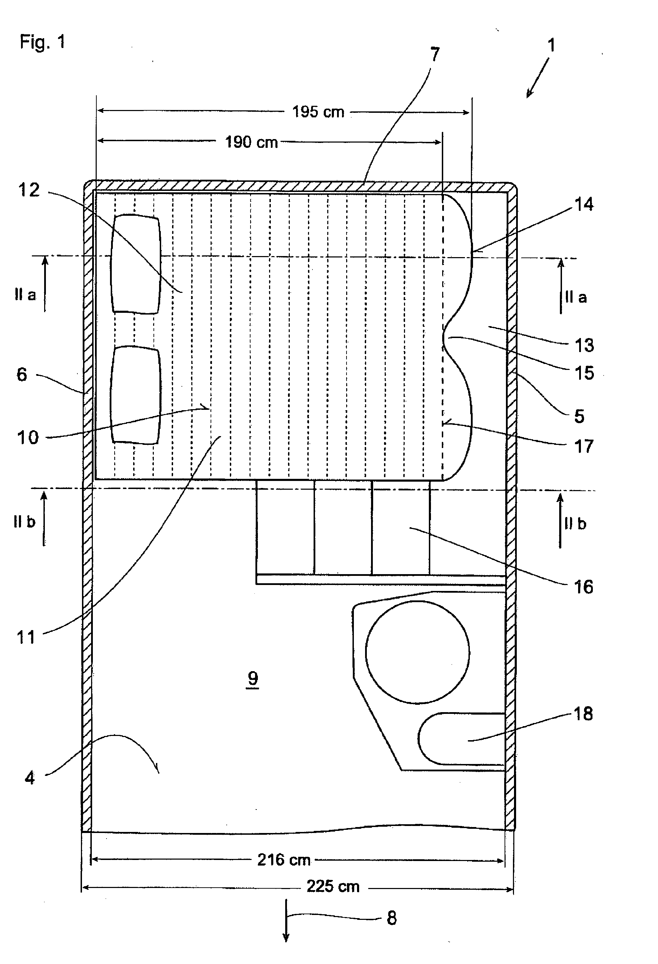

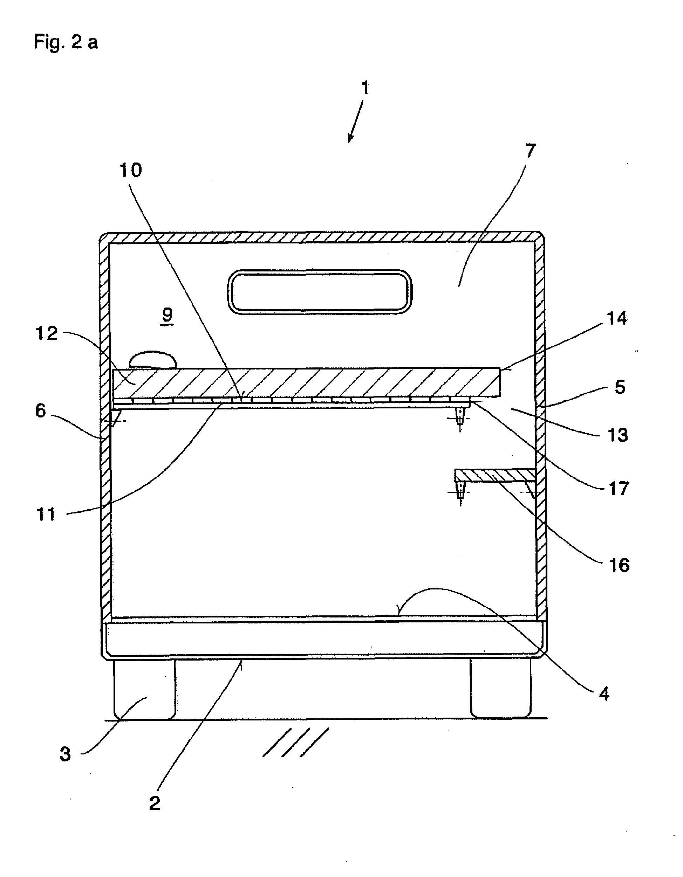

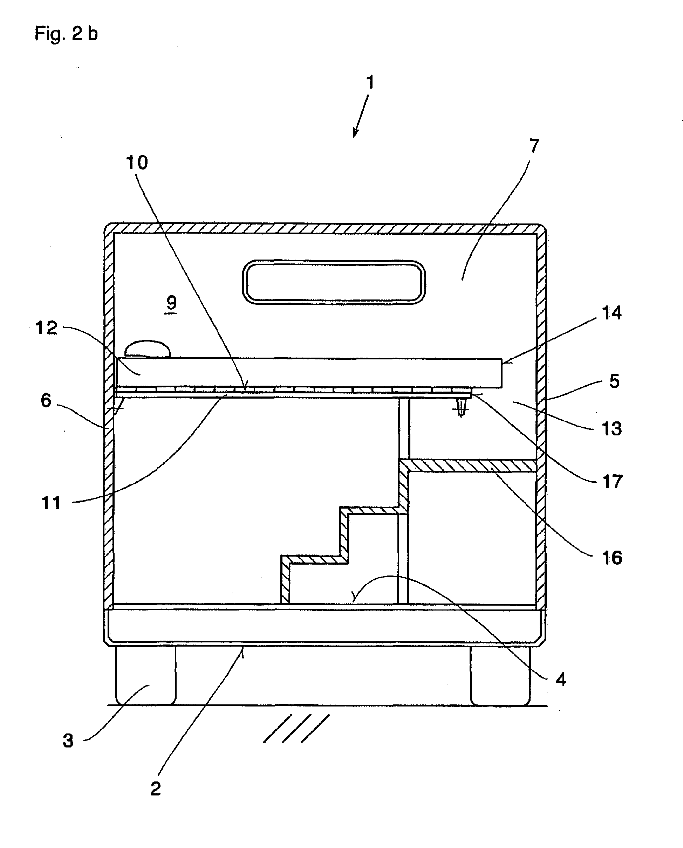

In den Figuren 1, 2a und 2b ist ein Fahrzeug 1, das als Wohnmobil oder Wohnwagen zur Beherbergung von Menschen dient, abgebildet. Das Fahrzeug 1 besteht aus einem Fahrgestell 2, an dem vier Räder 3 angelenkt sind. Des Weiteren sind an dem Fahrgestell 2 ein Boden 4, zwei Seitenwände 5 und 6 sowie eine Rückwand 7 zur Bildung eines Innenraumes 9 angebracht.

Die Größe des Fahrzeugs 1 ist begrenzt auf eine Maximalbreite 225 Zentimetern, so dass der Innenraum 9 eine Breite von etwa 216 Zentimetern aufweist. Diese Innenraumbreite verläuft zwischen den beiden parallel zueinander ausgerichteten Seitenwänden 5 und 6.

Die Fahrtrichtung des Fahrzeuges 1 ist mit der Bezugsziffer 8 versehen. Um die zur Beherbergung von Menschen notwendigen und üblichen Einrichtungsgegenstände 18 möglichst optimal anzuordnen, so dass diese leicht zugänglich und bedienbar sind, ist es erforderlich, die großflächigen Betten, die als Liegeflächen 10 gekennzeichnet sind, platzsparend auszurichten.

In dem Ausführungsbeispiel nach den Figuren 1, 2a und 2b ist die Liegefläche 10 im Heckbereich des Fahrzeuges 1 und senkrecht zu der Fahrtrichtung 8 angeordnet, so dass die Liegeflächen 10 parallel zu der Rückwand 7 und zwischen den beiden Seitenwänden 5 und 6 verläuft.

Die Liegefläche 10 besteht aus einer vom Boden 4 beabstandeten Auflageplatte 11, auf der eine oder mehrere Matratzen 12 angeordnet sind. Die Auflageplatte 11 besteht aus einem biegesteifen und die Matratze 12 aus einem elastischen Werkstoff. Beispielsweise kann die Auflageplatte 11 aus einem Holzlaminat und die Matratze 12 aus einem Schaumstoff hergestellt sein.

Um die Begehbarkeit der Liegefläche 10 nicht nur von einer Seite her zu ermöglichen, sondern auch von einer zweiten Seite zugänglich zu machen, ist zwischen der Auflageplatte 11 und der Seitenwand 5 ein Freiraum 13 vorgesehen, der von Personen begehbar ist. Dieser Freiraum 13 weist im Querschnitt eine U-förmige Innenkontur auf.

Um den Liegekomfort für die Liegefläche 10 an den üblichen Standard anzupassen, beträgt die Länge der Matratze 12 mindestens 195 Zentimeter. Die Matratze 12 überragt teilweise die Auflageplatte 11, die demnach einen größeren Abstand zu der Seitenwand 5 aufweist als die Matratze 12 und deren Länge folglich etwa 185 bis 190 Zentimeter beträgt. Da die Matratze 12 aus einem elastischen Werkstoff hergestellt ist, kann diese gegebenenfalls von der Person, die den Freiraum 13 benutzt, nach oben, unten oder zur Seite weggedrückt werden, so dass die Matratze 12 die Zugänglichkeit des Freiraumes 13 nicht beeinträchtigt. Gleichwohl weist die Matratze 12 die übliche komfortable Länge von 195 Zentimetern auf.

Um ein Drehen um die eigene Achse der Person innerhalb des Freiraumes 13 zu gewährleisten, die in dem Freiraum 13 eine Ausrichtung zu der Liegefläche 10 oder von dieser weg vornehmen möchte, ist in die Stirnseite 14 der Matratze 12 eine wellenförmige oder herzförmige Kontur eingearbeitet. Die der Innwand 5 zugewandte Stirnseite 14 der Matratze 12 weist diese wellenförmige Kontur auf. Zwischen zwei Wellentälern dieser Kontur ist somit eine Aussparung 15 geschaffen, in der sich der Mensch um die eigene Achse bewegen kann, ohne dabei durch die Auflageplatte 11 oder die Matratze 12 gehindert zu sein, denn die Aussparung 15 ist fluchtend bis zu der Auflageplatte 11 zurückgeführt, so dass in diesem Bereich weder die Auflageplatte 11 noch die Matratze 12 den Freiraum 13 einschränkt. Der Abstand zwischen der Aussparung 15 und dem Boden des Freiraumes ist derart bemessen, dass die Matratze 12 bei einer Person mit einer Größe von 175 Zentimetern etwa im Bereich des Oberschenkels verläuft.

Es ist auch denkbar, dass die Stirnseite 17 der Auflageplatte 11 nicht nur, wie in den Figuren 1 bis 2b dargestellt, plan ausgestaltet ist, sondern diese kann an die Kontur der Stirnseite 14 der Matratze 12 angepasst sein, also ebenso wellenförmig verlaufen.

Da der Freiraum 13 ein höheres Niveau aufweist als der Boden 4 des Innenraumes 9, ist eine oder mehrere Treppenstufen 16 vorgesehen, die von dem Innenraum 9 in den Freiraum 13 verlaufen, so dass der Freiraum 13 vom Innenraum 9 begehbar ist und vice versa. Die Treppenstufen 16 sind parallel zu der Längsachse der Liegefläche 10 ausgerichtet und nehmen daher relativ wenig Platz von dem restlichen Bereich des Innenraumes 9 in Anspruch.

## Patentansprüche

1. Fahrzeug (1), insbesondere Wohnmobil oder Wohnwagen, zur Beherbergung von Menschen, bestehend aus einem Fahrgestell (2), an dem ein Boden (4), zwei Seitenwände (5, 6) und eine Rückwand (7) zur Bildung eines Innenraumes (9) mit einer Breite zwischen den beiden Seitenwänden (5, 6) von etwa 210 bis 225 Zentimetern geschaffen ist, und aus mindestens einem parallel zu der Rückwand (7) und an dieser anliegenden Liegefläche (10), die eine Auflageplatte (10) und eine oder mehrere auf dieser aufgelegten Matratzen (12) umfasst,
**dadurch gekennzeichnet,**
**dass** zwischen einer der beiden Seitenwände (5, 6) und der Auflageplatte (11) ein begehbarer Freiraum (13) vorgesehen ist, dass die Matratze (12) die Auflageplatte (11) in Richtung des Freiraumes (13) überragt und eine Mindestlänge von etwa 195 Zentimetern aufweist und dass die in dem Bereich des Freiraums (13) verlaufende Stirnseite (14) der Matratze (12) eine wellen- oder herzförmige Kontur aufweist.

2. Fahrzeug nach Anspruch 1,
**dadurch gekennzeichnet,**
**dass** der Abstand zwischen den der Seitenwand (5 oder 6) zugewandten Enden der Matratzen (12) derart ausgestaltet ist, dass zwischen der Seitenwand (5 oder 6), der Matratzen (12) und der wellenförmigen Kontur der Stirnseite (14) eine Aussparung (15) gebildet ist, die eine Fläche aufweist, die in etwa an den Körperumfang eines Menschen angepasst ist.

3. Fahrzeug nach Anspruch 1 oder 2,
**dadurch gekennzeichnet,**
**dass** die Stirnseite (14) der Matratze (12) im Bereich der Aussparung in etwa fluchtend zu der Auflageptatte (11) verläuft.

4. Fahrzeug nach einem der vorgenannten Ansprüche,
**dadurch gekennzeichnet,**
**dass** seitlich neben der Auflageplatte (11) eine oder mehrere Treppenstufen (16) vorgesehen ist bzw. sind, die von dem Innenraum (9) in den Freiraum (13) münden.

5. Fahrzeug nach einem der vorgenannten Ansprüche,
**dadurch gekennzeichnet,**
**dass** die Matratze (12) aus einem flexiblen und die Auflageplatte (11) aus einem biegesteifen Werkstoff gefertigt sind.

6. Fahrzeug nach einem der vorgenannten Ansprüche,
**dadurch gekennzeichnet,**
**dass** die Breite des Freiraumes (13) zwischen der einen Innenwand (5 oder 6) und der Auflageplatte (11) etwa 25 bis 30 Zentimeter beträgt und dass die dem Freiraum (13) zugewandte Stirnseite (17) der Auflageplatte (11) wellenförmig oder plan ausgebildet ist.

## Claims

1. Vehicle (1), in particular motor home or caravan, for accommodating people, consisting of a chassis (2), on which a floor (4), two side walls (5, 6) and a rear wall (7) for forming an interior space (9) with a width between the two side walls (5, 6) of approximately 210 to 225 centimetres are provided, and at least one supporting plate (10) which bears against and is parallel to the rear wall (7) and comprises a supporting plate (11) and one or more mattresses (12) placed thereon, **characterized in that** an accessible free space (13) is provided between one of the two side walls (5, 6) and the supporting plate (11), and **in that** the mattress (12) protrudes beyond the supporting plate (11) in the direction of the free space (13) and has a minimum length of approximately 195 centimetres, and **in that** the end side (14) of the mattress (12) which extends in the region of the free space (13) has a wavy or heart-shaped contour.

2. Vehicle according to Claim 1, **characterized in that** the distance between the ends of the mattresses (12) that face the side wall (5 or 6) is configured in such a manner that a recess (15) is formed between the side wall (5 or 6), the mattresses (12) and the wavy contour of the end side (14), the recess (15) having an area which is matched approximately to the body circumference of a person.

3. Vehicle according to Claim 1 or 2, **characterized in that** the end side (14) of the mattress (12) runs approximately in alignment with the supporting plate (11) in the region of the recess

4. Vehicle according to any of the preceding claims, **characterized in that** one or more steps (16) leading from the interior space (9) into the free space (13) is or are provided laterally next to the supporting plate (11).

5. Vehicle according to any of the preceding claims, **characterized in that** the mattress (12) is manufactured from a flexible material and the supporting plate (11) is manufactured from a flexurally rigid material.

6. Vehicle according to any of the preceding claims, **characterized in that** the width of the free space (13) between the one inner wall (5 or 6) and the supporting plate (11) is approximately 25 to 30 centimetres, and **in that** the end side (17) of the supporting plate (11) which faces the free space (13) is of wavy or flat design.

## Revendications

1. Véhicule (1), en particulier camping-car ou caravane, pour l'hébergement de personnes, constitué d'un châssis (2) sur lequel sont formés un fond (4), deux parois latérales (5, 6) et une paroi arrière (7) pour former un intérieur (9) ayant une largeur entre les deux parois latérales (5, 6) d'environ 210 à 225 cm, et constitué d'au moins une surface de couchage (10) s'appliquant contre la paroi arrière (7) parallèlement à celle-ci, laquelle comprend une plaque d'appui (11) et un ou plusieurs matelas (12) disposés sur celle-ci,
**caractérisé en ce**
**qu'**entre l'une des deux parois latérales (5, 6) et la plaque d'appui (11) est prévu un espace libre accessible (13), en ce que le matelas (12) dépasse de la plaque d'appui (11) dans la direction de l'espace libre (13) et présente une longueur minimale d'environ 195 cm et en ce que le côté frontal (14) du matelas (12) s'étendant dans la région de l'espace libre (13) présente un contour de forme ondulée ou en forme de coeur.

2. Véhicule selon la revendication 1,
**caractérisé en ce que**
la distance entre les extrémités des matelas (12) tournées vers la paroi latérale (5 ou 6) est configurée de telle sorte qu'entre la paroi latérale (5 ou 6), les matelas (12) et le contour de forme ondulée du côté frontal (14) soit formé un évidement (15) qui présente une surface qui est approximativement adaptée au tour du corps d'une personne.

3. Véhicule selon une des revendications 1 ou 2,
**caractérisé en ce que**
le côté frontal (14) du matelas (12) s'étend approximativement en alignement avec la plaque d'appui (11) dans la région de l'évidement.

4. Véhicule selon l'une quelconque des revendications précédentes,
**caractérisé en ce que**
latéralement à côté de la plaque d'appui (11) est ou sont prévue(s) une ou plusieurs marches d'escalier (16), qui débouchent dans l'espace libre (13) depuis l'intérieur (9).

5. Véhicule selon l'une quelconque des revendications précédentes,
**caractérisé en ce que**
le matelas (12) est fabriqué d'un matériau flexible et la plaque d'appui (11) est fabriquée à partir d'un matériau rigide en flexion.

6. Véhicule selon l'une quelconque des revendications précédentes,
**caractérisé en ce que**
la largeur de l'espace libre (13) entre l'une des parois intérieures (5 ou 6) et la plaque d'appui (11) vaut environ 25 à 30 cm et **en ce que** le côté frontal (17) de la plaque d'appui (11) tourné vers l'espace libre (13) est réalisé sous forme ondulée ou plane.
